# EUROPEAN PATENT SPECIFICATION

(11) **EP 2 078 948 B1**
(45) Date of publication and mention of the grant of the patent: **30.12.2009**
(21) Application number: 08018713.1
(22) Date of filing: 25.10.2008
(51) Int. Cl.: G01N 3/00

(54) **Material deformation testing stand for the long-term monitoring of deformation characteristics under constant pressure**
Materialdeformationsprüfstand für die langfristige Überwachung der Deformationseigenschaften unter konstantem Druck
Support de test de déformation de matériel pour la surveillance à long terme de la déformation des caractéristiques sous une pression constante

(43) Date of publication of application: 15.07.2009
(73) Proprietor: Vysoke uceni technicke v Brne Fakulta stavebni Ustav pozemniho stavitelstvi, 602 00 BRNO (CZ)
(72) Inventor: Matejka, Libor, 602 00 Brno (CZ); Pencik, Jan, 603 00 Brno (CZ); Zitt, Petr, 373 84 Dubne (CZ)
(74) Representative: Malusek, Jiri

(56) References cited:
- EP-A- 0 992 783
- FR-A- 949 560
- FR-A- 1 290 309
- US-A- 5 693 890
- TSUCHIYA T ET AL: "Tensile testing system for sub-micrometer thick films" SENSORS AND ACTUATORS A, ELSEVIER SEQUOIA S.A., LAUSANNE, CH, vol. 97-98, 1 April 2002 (2002-04-01), pages 492-496, XP004361642 ISSN: 0924-4247

## Description

### Background of the Invention

The invention concerns the material deformation testing stand for the long-term monitoring of deformation characteristics under constant pressure. Specifically the invention focuses the application testing stand of construction materials used in building but also other materials such as plastics, requiring the application of constant pressure for the entire duration of the test. Besides pressure testing, the testing stand can be also used to tensile tests as well as stress characteristics, depending on the stand's arrangement.

### State of the Art

At the present time, construction materials are tested using various testing apparatuses, depending on how long the test takes. For short-term tests, oil-driven hydraulic presses or other devices are used to induce either tension or pressure on the test sample in a controlled deformation. For long-term tests, systems utilizing compressed springs or weights can be used in addition to the previously mentioned methods.

Such systems can be used in cases where the material has a high elasticity module, namely materials in which the stress applied does not result in significant deformation. However, in such materials, even a minor deformation results in the pressure applied by the mechanism, or compression, having less of an effect. For materials with a lower elasticity module, these measuring systems cannot be used because the greater deformations also results in the pressure applied by the mechanism, or compression, having less of an effect. This decreased effect is compensated by for example increasing the pressure of a press, increasing a spring's compression, etc.

However, a major disadvantage of such a stress testing system is the mass of the weights, and their size in relation to the resulting compression. One can generally say that in using existing systems for long-term tests it is problematic, if not impossible to maintain a constant force or compression for the duration of the test.

The document CZ 217708 B1 describes a device for measuring deformation in materials and elements used in building construction under a static load using a system that induces a pressure in a test sample utilizing a weight. This device consists of a measuring grid whose frame contains attachments for deviation gauges. In its center is the main rod, whose lower portion acts upon the test sample, usually a block, through a measuring device; and whose upper portion contains a space for placing weights. Such a device takes up a lot of space, and requires the storage of and manipulation with large weights.

The another document CZ 2226524 B1 describes a stand for testing construction elements - concrete building blocks, by their bending under a static load. This device is based on the principle of a lever. With this stand, the pressure is created using weights placed on the lever arm whose joint is directly over the sample. Such a device is likewise inconvenient, especially considering the length of the lever arm necessary to create any higher pressures.
In US 5, 693, 890 a load module to uniaxial material testing, particularly for uniaxial tensile creep is presented, consisting of a base in the form of a frame with a supporting frame and a weight bearing arm having a pivot for a swinging connection with the supporting frame. But this apparatus can not be used for testing under a constantly applied stress.
In FR 1.290.309 and FR 949.560 load stands for material testing, particularly fortensile tests are presented, again consisting of a base in the form of a frame with a supporting frame and a weight bearing arm having a pivot for a swinging connection with the supporting frame. But these stands can not be used for testing under a constantly applied stress.

The aim of invention is to present a universal endurance testing stand for long-term monitoring of the deformational characteristics of construction materials under a constantly applied load, which would take up less space and also enable the application of variable loads.

### Feature of the Invention

The above mentioned disadvantages are considerably eliminated by the use of the material deformation testing stand for the long-term monitoring of deformation characteristics under constant pressure according to the invention which consists of a base in the form of a frame with a supporting frame and a weight bearing arm having a pivot for a swinging connection with the supporting arm characterised in that rising from one end, at a distance from it there is a positioning frame, and further it consists of a weight bearing arm rested on said supporting frame, wherein the weight bearing arm has on one end a pivot for a swinging connection with at least one tie rod which has on its other side another pivot for hanging onto a pressing arm arranged approximately parallel to the weight bearing arm and the pressing arm is held in position by a pivot and also by a horizontal pivot located on the positioning frame, wherein the horizontal pivot is arranged at a distance from the free end of the pressing arm and between the free end of the pressing arm and the base is a space for arrangement of a measurement assembly with the test sample.

In an advantageous embodiment the frames are constructed as closed with support columns which are connected at their tops with cross-beams.

In another advantageous embodiment the arms are connected by double tie rods.

In another advantageous embodiment a supporting block is arranged upon its base.

In another advantageous embodiment the weight bearing arm is fitted with a grooved seat into which a wedge having a triangular shape mounted on the cross-beam of the support columns of the supporting frame is laid.

In another advantageous embodiment the horizontal pivot is arranged in both supporting columns and forms the joint of the positioning frame.

In another advantageous embodiment the arm under the weight bearing arm is constructed as a transmission arm having a pivot at its free end holding two tie rods attached to a similar pivot on the lower exerting arm which is located parallel to the other arms, wherein the exerting arm is held in the position by the pivot and by the pivot arranged on the supporting frame through which the arm protrudes, so the lower exerting arm is held in place between support columns of the frame and also between the support columns of the other frame, wherein the area beneath the free end of the arm is in the base arranged an load frame having an upper supporting cross-beam, wherein between the upper supporting cross-beam and the free end of the arm is a place for arrangment of the measuring assembly with the sample.

In another advantageous embodiment underneath the arm on the positioning column and along both sides of this column horizontal rods having pivots at their ends are arranged swingable on a pivot.

In another advantageous embodiment on the pivot the vertical tie rods are arranged, which are at their other ends hung swingable on the free end of the arm.

The testing stand is based on the principle of a force-multiplying lever acting on the force-exerting lever with a variable force ratio. This ratio is easily adjusted by the positioning of the weight on the stand's main weight-bearing arm.

The main advantage of the proposed system is the exertion and maintenance of a constant pressure, or tension, on the element to be tested corresponding to the leverage selected and the weights used, for the entire duration of the test.

The endurance testing stand, in all three of its adaptations presented below, includes a strain gauge dynamometer, adjustable sample support pedestals, or jaws, and induction sensors for measuring deformation. In cases where thicker samples are tested, the induction sensors can be replaced with resistance strain gauges.

### Description of the Drawings

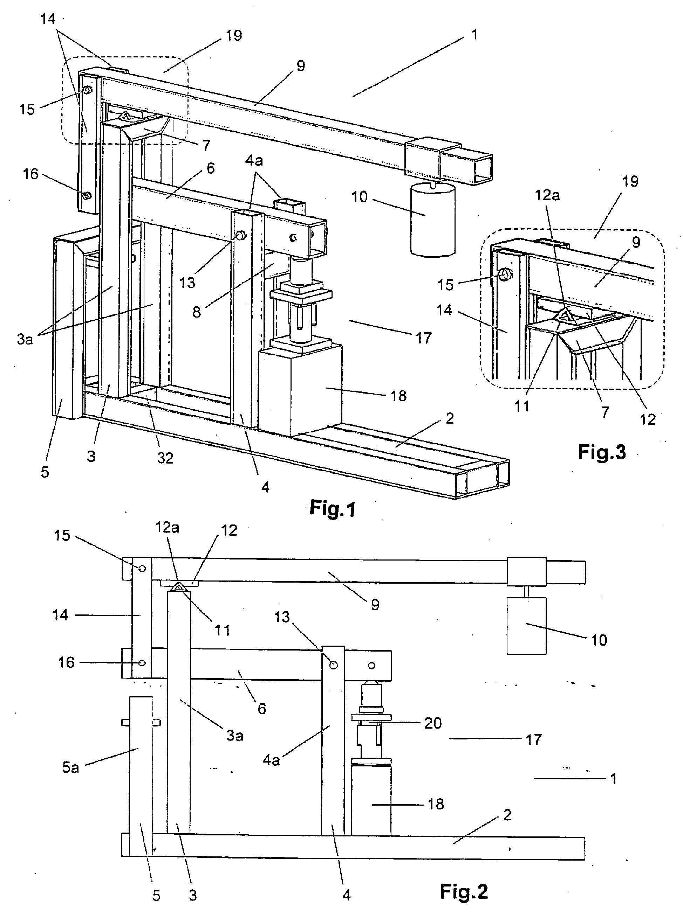

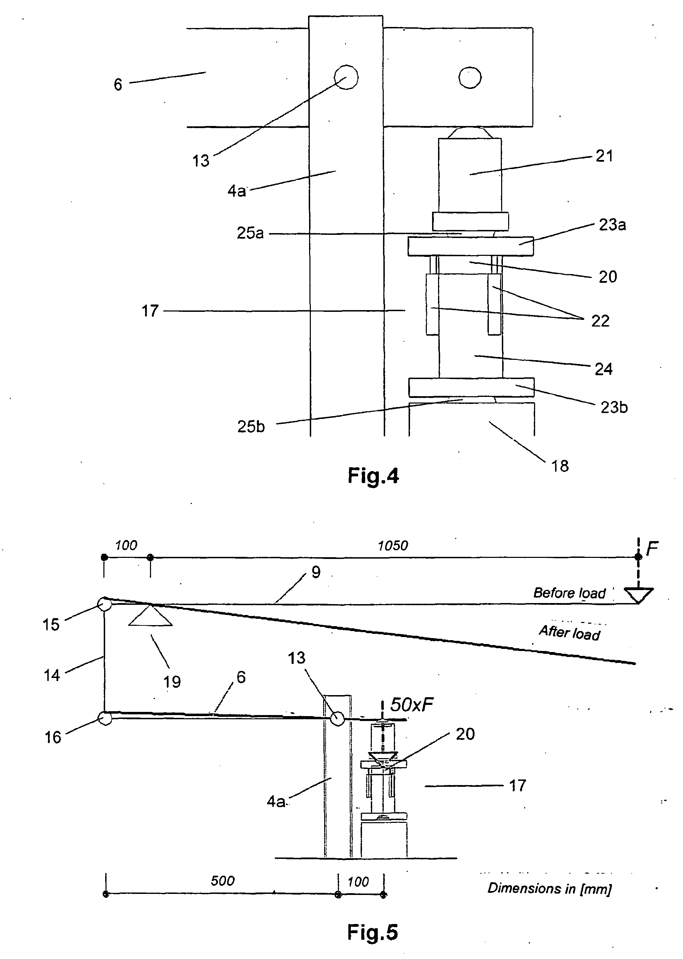

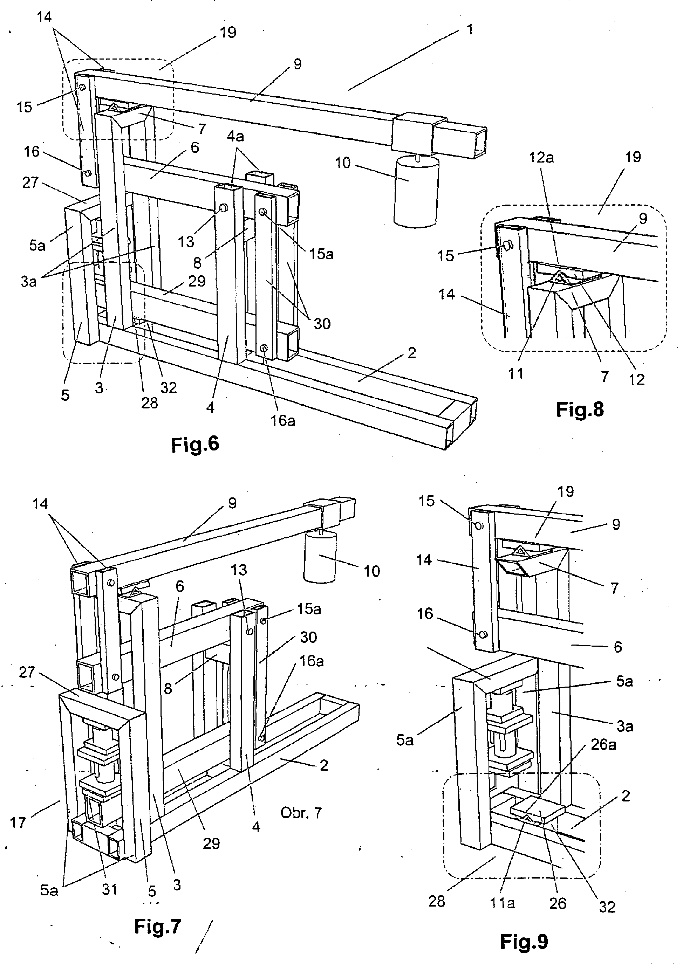

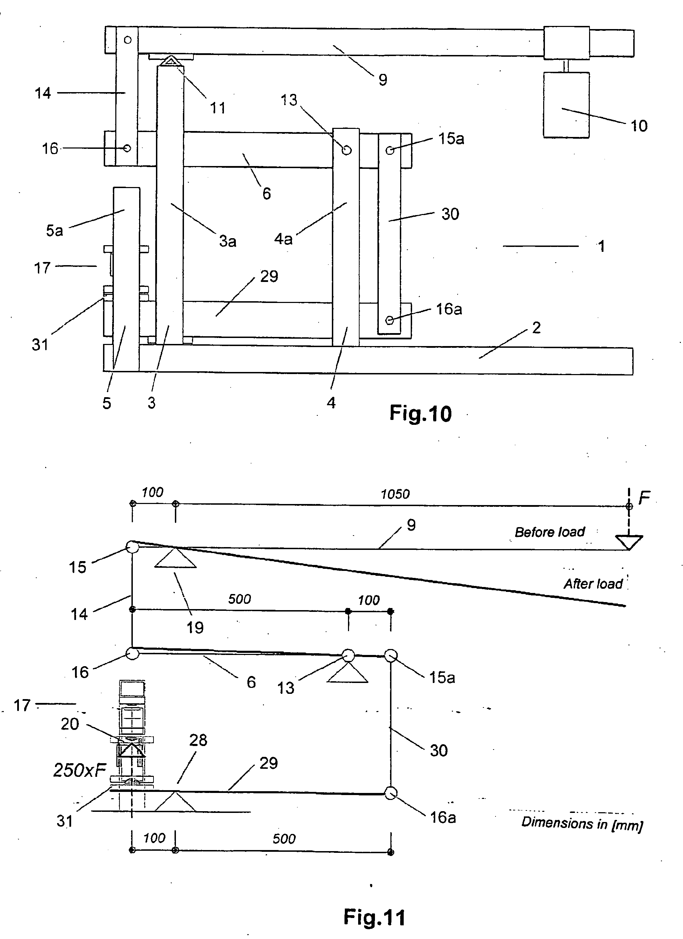

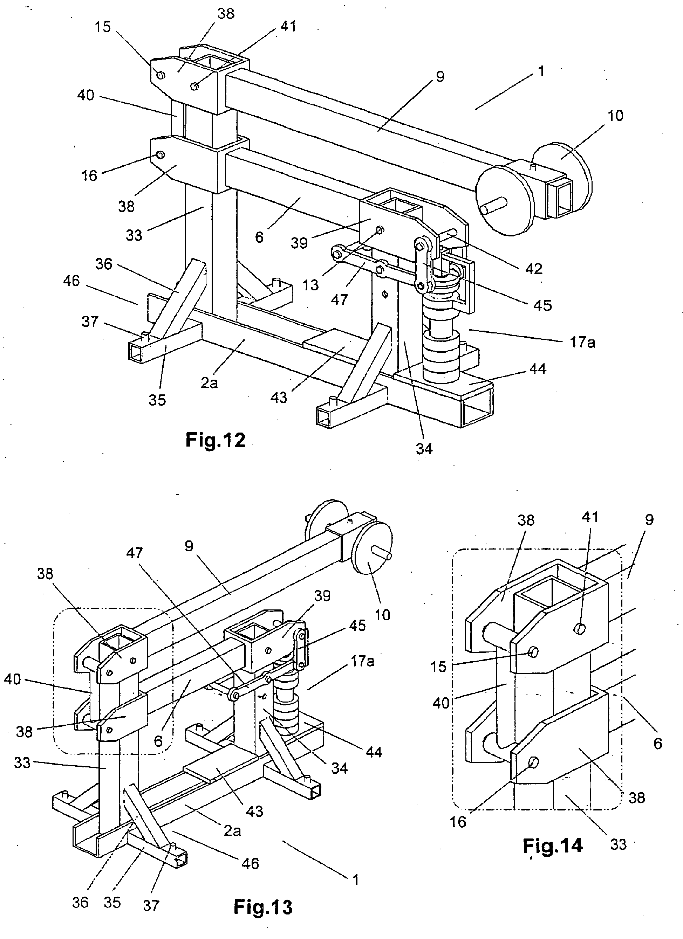

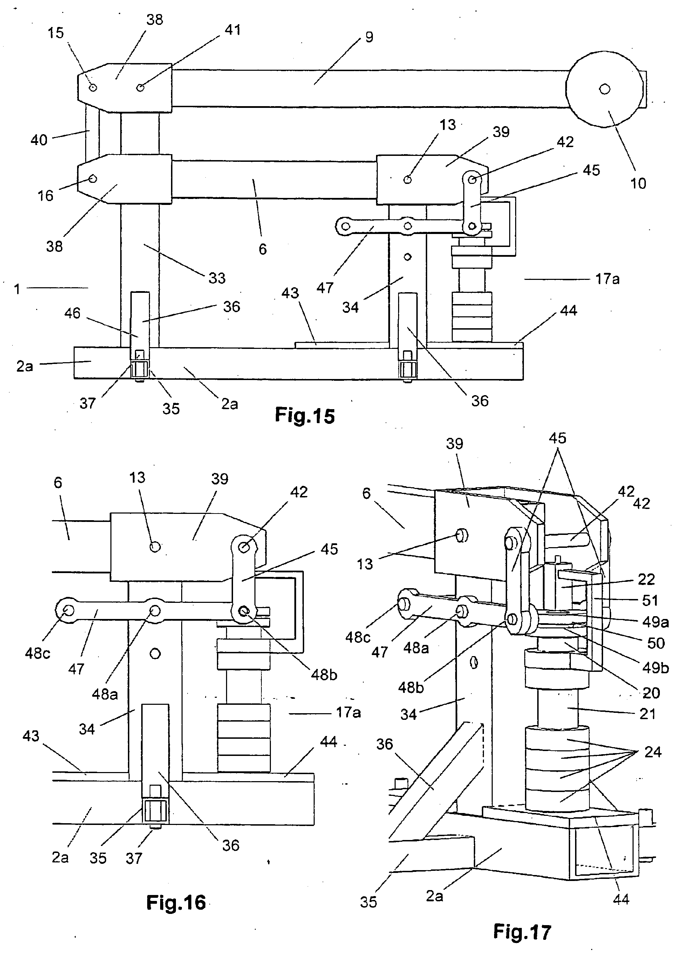

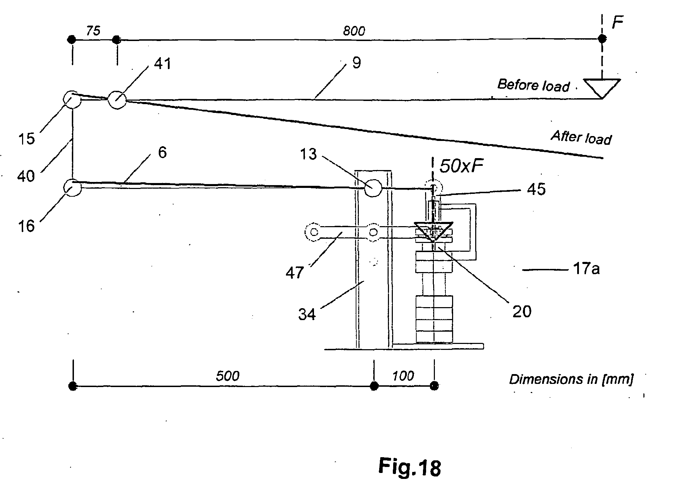

The invention will be further explained using drawings, in which Fig. 1 presents an axonometric view of the testing stand according to the invention in its first embodiment with a simple lever, Fig. 2 presents a frontal view of the stand from Fig. 1, Fig. 3 shows a detail of the arrangment of the weight bearing arm's on a supporting frame, Fig. 4 shows a detail of the measurement assembly with the test sample, Fig. 5 presents a static scheme of the leverage system, Fig. 6 presents an axonometric view of the testing stand according to the invention in its second embodiment with a double lever, Fig. 7 presents an other axonometric view of the stand from Fig. 6, Fig. 8 shows a detail of the arrangment of the weight bearing arm's on a supporting frame, Fig. 9 shows a detail of the measurement assembly with the test sample, Fig. 10 shows a frontal view of the testing stand from Fig. 6 and 7, Fig. 11 presents a static scheme of the double leverage system, Fig. 12 presents an axonometric view of the testing stand according to the invention in its third embodiment with a simple lever, Fig. 13 presents an other axonometric view of the stand from Fig. 12, Fig. 14 shows a detail of the connection between the weight bearing arm and the force exerting arm, Fic. 15 is a frontal view of the testing stand from Fig. 13, Fig. 16 shows a front view of a detail of the measurement assembly with the test sample, Fig. 17 shows an axonometric view of a detail of the measurement assembly with the test sample from Fig. 16 and and Fig. 18 shows a static scheme of the leverage system by the third embodiment.

### Preferred Embodiments of the Invention

Fig. 1 shows an axonometric view and Fig. 2 presents a frontal view of the testing stand in its first version with a single lever. The stand 1 consists of a base 2 which is formed as an closed frame upon which, in close proximity to one of its ends and perpendicular to its plane, a supporting frame 3 is attached. Approximately in the center of the base 2, a positioning frame 4 is attached perpendicular to its plane, holding the pivot for the force exerting arm 6. At the end of the base 2, and near the supporting frame 3 and parallel to it, a retaining frame 5 is attached, which will be used in the second embodiment described later. Frames 3 and 4 are made as closed. They are formed by two supporting columns 3a and 4a, and in the supporting frame 3 are connected at their tops by the cross-beam 7. In the case of the positioning frame 4 the support columns 4a are connected by cross-beam 8. This cross-beam 8 is placed at such a distance underneath the force exerting arm 6 so as to facilitate its downward motion. The support columns 4a of the positioning frame 4 have holes in them supporting a horizontal pivot 13. This pivot 13 is the joint for the force exerting arm 6.

Anchored in the joint 19, the weight bearing arm 9 and its weight 10 are placed on top of the supporting frame 3. By positioning the weight 10 on the weight bearing arm 9 the force acting on the test sample can be varied. The position of the weight 10 is fixed using set screws which prevent the movement of the weight 10 along the arm 9 for the duration of the test.

The joint 19, as shown in detail in Fig. 3, is placed underneath the weight bearing arm 9 and formed from a triangular piece 11 of perpendicularly cut steel and a seat 12 having a lateral groove 12a. The upper edge of the piece 11 fits into the groove 12a in the seat 12.

The weight bearing arm 9 is connected to the force exerting arm 6 using two tie rods 14. These tie rods 14 are attached to the arms 6 and 9 via two horizontal pivots 15 and 16 which pass through the arms 6 and 9 and tie rods 14. The position of the weight bearing arm 9 is maintained by a pivot 15 and the placement of the arm on top of the supporting frame 3 using the fixed pivot of the joint 19. The position of the force exerting arm 6 is determined by its attachment to the positioning frame 4 using a pivot 13 and its attachment to the tie rods 14 using pivots 16.

Near the positioning frame 4 and underneath the overhanging portion of the force exerting arm 6 there is a supporting block 18, or plate, depending on the thickness of the sample. The space between the overhanging end of the arm 6 and the supporting block 18 is occupied by the measuring assembly 17 with the sample 20.

From a construction standpoint, the connection between the weight bearing 9 and the force exerting 6 arm using horizontal pivots 15 and 16 can be accomplished by means other than the double tie rods 14 such as a single tie rod, etc. Likewise the means of creating the joint 19 on which the weight bearing arm 9 is placed can also be accomplished using other common means.

Fig. 1 to 3 shows the structural aspects of the endurance testing stand 1 in its first embodiment. Before the test, the measuring assembly 17 is placed upon the supporting block 18 along with the sample 20. The measuring system, depicted in detail in pic. 4, consists of a tensometric dynamometer 21, an upper 23a and lower 23b load bearing plate, the sample 20, and a steel arrangement 24 onto which are affixed induction tracking sensors 22. The centering of the entire measuring apparatus is accomplished by adjustable upper 25a and lower 25b ball joints, which are placed between the tensometric dynamometer 21 and the upper load bearing plate 23a and between the lower load bearing plate 23b and the supporting block 18.

Fig. 5 is a schematic scheme of the endurance testing stand's leveraging system in its first embodiment. In this embodiment, the testing stand can be used, taking into account its dimensions as given in Fic. 5, at a maximum leverage ratio of 1:50, meaning that when a weight 10 having a mass of 100 kg is placed at the end of the weight bearing arm 9 it will act upon the sample 20 with a force of 50x100, it means 5000 kg. By changing the dimensions of the arms 6 and 9 this ratio can be increased.

Fig. 6 and 7 shows an axonometric view, and Fig. 10 depicts a frontal view of the testing stand in its second embodiment, namely a stand having a double lever. The testing stand in its second embodiment is constructionally based on the first embodiment but is augmented by a third arm, and during the testing utilizes the retaining frame 5. In this embodiment, the force exerting arm becomes the arm 29 and the arm 6 becomes a transmission arm.

The testing stand 1 likewise consists of a base 2 formed by an enclosed frame upon which a supporting frame 3 is attached perpendicular to its plane and near one of its ends. Approximately in the middle of the base 2 there is, once again, a positioning frame 4 attached perpendicular to its plane for the pivotal placement of the transfer arm 6. At the end of the base 2, near the supporting frame 3 and parallel to it, is attached an retaining frame 5 which is used to hold the measuring assembly 17 and the sample 20. Frames 3, 4, and 5 are all closed. They are formed from two supporting columns each 3a, 4a, and 5a. Columns 3a are connected at their upper ends by cross-beam 7 to form the supporting frame 3. In the case of the positioning frame 4, the support columns 4a are joined by cross-beam 8. This cross-piece is located at a sufficient distance under the transfer arm 6 to insure its unhindered movement. Supporting columns 5a are connected at their upper ends by a load bearing cross-beam 27. The supporting columns 4a of the positioning frame 4 have openings in their upper portion to support a horizontal pivot 13. This pivot 13 acts as a joint for the transfer arm 6.

At the top of the supporting frame 3 is also a joint 19 upon which the weight bearing arm 9 and its weight 10 rests. The position of the weight 10 can be adjusted depending on the amount of force is needed to act upon the test sample. The position of the weight 10 is fixed using set screws so that the weight 10 cannot freely travel along the length of the arm 9 during the test.

On the base 2, right beneath the supporting frame 3 is a cross-beam 32 reinforcing the base having a stationary jpint 28 on its upper part, upon which the force exerting arm 29 rests.

The joint 19, shown in detail in Fig. 8, is located underneath the weight bearing arm 9 and is formed from a triangular piece 11 of perpendicularly cut steel and a seat 12 having a lateral groove 12a. The upper edge of the piece 11 fits into the groove 12a in the seat 12. The stationary joint 28 functions in a similar manner. It is located underneath the force exerting arm 29 and formed from a triangular piece 11a of perpendicularly cut steel and a seat 26 having a lateral groove 26a. The upper edge of the piece 11 a fits into the groove 26a in the seat 26.

The weight bearing arm 9 is connected to the transmission arm 6 using two tie rods 14. The tie rods 14 are attached to arms 6 and 9 by horizontal pivots 15 and 16 which pass through the arms 6 and 9 and the tie rods 14. The transmission arm 6 is connected to the force exerting arm 29 using two tie rods 30. The tie rods 30 are attached to the arms 6 and 29 by joints consisting of horizontal pivots 15a and 16a, which pass through arms 6 and 29 and their tie rods 30. The position of the weight bearing arm 9 is maintained by a horizontal pivot 15 and its placement on the supporting frame 3 via the joint 19. The position of the transmission arm 6 is determined by its jointed attachment to the frame 4 using a pivot 13 and its attachment to the tie rods 14 using pivots 16. The force exerting arm 29 is secured by its placement on the base 2 via a joint 28 which lies on a perpendicular reinforcement cross-beam 32 of the base, and its jointed attachment via a pivot 16a to the tie rods 30. The mutual connection of the weight bearing arm 9 and the transmission arm 6 is done using tie rods 14 which are connected to the arms by pivots 15 and 16. The mutual connection of the transmission arm 6 and the force exerting arm 29 is secured by tie rods 30, which are attached to the arms via pivots 15a and 16a.

The place between the arresting frame 5 and the extended end of the force bearing arm 29 is occupied by the measuring assembly 17 and the sample 20. A detail of the placement of the measuring devices within the frame 5 is shown in Fig. 9. The measuring apparatus is set up the same way as in the first version and is shown in Fig. 4. To the upper surface of the arm 29 is attached a pressure plate 31 directly beneath the retaining frame 5.

From a construction standpoint, the connection between the load bearing arms 6, 9, and 29 using horizontal pivots 15 and 16, or 15a and 16a can be effected using other means, not just with double tie rods 14 and 30 but for example single tie rods, etc. Same applies to the joints 19 and 28 on which the weight bearing arm 9 and the force exerting arm 29 rest, both can be substituted using commonly used methods.

Fig. 11 is a schematic representation of the leveraging system for the testing stand in its second version. In this version of the testing stand it's possible, using the measurements given in pic. 11, to achieve a leverage of 1:250, namely when a weight 10 having a mass of 100 kg is placed at the end of the weight bearing arm 9, the sample 20 will be acted upon with a force of 250x100 it means 25000 kg. With changes to the dimensions of the arms 6, 9, and 29, this leverage can be increased.

Fig. 12 and 13 show an axonometric view and Fig. 15 shows a frontal view of the testing stand in its third embodiment, namely, a stand with a single lever with the possibility of use for either pressure or draw. The concept behind the third embodiment of the testing stand is based upon the first embodiment in that there is a simplified arrangement of the measuring assembly and the test sample, the manner of force transmission, utilization of horizontal forces created by the weight bearing arm as it travels in a partial arc, and the possibility for use for either compression or drawing without any further modifications.

The testing stand 1 consists of a base 2a formed out of U-beams, upon which near its left-hand side when viewed as in Fig. 15, and parallel to its plane is attached a supporting column 33. Near the right-hand side and also parallel to the plane of the base 2a is attached a positioning column 34 which is used to secure an articulated force exerting arm 6. Columns 33 and 34 are formed from enclosed square beams, having in their upper portions receptacles to hold horizontal pivots 13 and 41. A weight bearing arm 9 has a movable weight 10 affixed to it to vary the intensity of the force acting upon the sample. The position of the weight 10 can be fixed in place using a set screw to immobilize the weight 10 relative to the weight bearing arm 9 for the duration of the test. The weight bearing arm 9 is equipped with a force transmission assembly 38 at its point of contact with the supporting column 33. This transmission assembly is also connected to the force exerting arm 6. On the end near the positioning column 34 the arm 6 is connected to a similar force transmission assembly 39. On the top of the base 2a, next to the positioning column are attached force dissipation plates 43 and 44.

The stability of the testing stand 1 is reinforced by four perpendicular braces 46 affixed to the base 2a and to support columns 33 or 34. These braces 46 are attached to four perpendicular appendages 35 each of which has on its end either a balancing or an attachment screw 37. The appendages 35 and the columns 33 and 34 are mutually connected by diagonal struts 36. The mutual positions of the weight bearing arm 9 and the force exerting arm 6 is determined by a connecting tie rod 40 shaped like the letter H. The tie rod 40 is connected via pivots 15 and 16 to the transmission assemblies 38 and connected to the arms 6 and 9. The weight bearing arm 9 is attached to the supporting column 33 using a horizontal pivot 41. Another horizontal pivot 13 connects the force exerting arm 6 and its transmission assembly 39 to the positioning column 34. To the transmission assembly 39 are connected two pressure rods 45 via a pivot 42, and which are connected via pivot 48b to two horizontal rods 47. These rods 47 are jointed to the positioning column 34 by a pivot 48a and are mutually connected via a pivot 48c.

Into the space underneath the pressure plate 45, and the horizontal rod 47, and the force-dispersion plate 44 is placed the measurement assembly 17a and the test sample 20. The details of the placement of the measuring assembly 17a is depicted in Fig. 17. The measuring assembly is arranged similarly to that in the first version. It consists of an upper 49a and a lower 49b pressure plate. The upper pressure plate is shaped like a ring and is connected via a pivot 48b with a pressure rod 45 and a horizontal rod 47. Between each of the plates 49a and 49b there is a ball joint 50 which serves to center them with the stand 1. The sample 20 is placed between the lower pressure plate 49a and the measuring device 51, to which is affixed an induction sensor 22. The measuring probe of the induction sensor 22 passes through the opening in the upper pressure plate 49a and touches the upper surface of the lower pressure plate 49b. Under the lower plate is placed a tensometric dynamometer 21 and steel spacing plates 24 which are placed on the force absorbing block 44.

Fig. 18 is a static scheme the leveraging system with the third embodiment of the testing stand. Based on the dimensions of the testing stand in Fic. 18, the maximum possible force ratio is 1:50, meaning that a 100 kg weight placed at the end of the weight bearing arm 9 will act upon the sample 20 with a force of 5000 kg. Should a greater ratio be desired, the lengths of the arms 6 and 9 can be adjusted.

All three variations of the endurance testing stand are primarily intended for the long-term monitoring of the deformational characteristics of construction materials acted upon at a constant pressure. The testing stand can also be used to monitor their drawing and bending characteristics depending on the arrangement of the stand.

The industrial utilization of the testing stand is especially suitable in laboratories or testing facilities, possibly in construction materials manufacturing plants.

## Claims

1. Material deformation testing stand for the long-term monitoring of deformation characteristics under constant pressure consisting of a base in the form of a frame with a supporting frame and a weight bearing arm having a pivot for a swinging connection with the supporting frame, **characterized in that**, rising from one end, at a distance from it there is a positioning frame (4), and further it consists of a weight bearing arm (9) rested on said supporting frame (3), wherein the weight bearing arm has on one end a pivot (15) for a swinging connection with at least one tie rod (14) which has on its other side another pivot (16) for hanging onto a pressing arm (6) arranged approximately parallel to the weight bearing arm (9) and the exerting arm (6) is held in position by a pivot (16) and also by a horizontal pivot (13) located on the positioning frame (4), wherein the horizontal pivot (13) is arranged at a distance from the free end of the exerting arm (6) and between the free end of the exerting arm (6) and the base (2) is a space for arrangement of a measurement assembly (17) with the test sample (20) on the supporting block (18).

2. Material deformation testing stand according to the claim 1, **characterized in that** the frames (3, 4) are constructed as closed with support columns (3a, 4a) which are connected at their tops with cross-beams (7, 8).

3. Material deformation testing stand according to the claim 1 and 2, **characterized in that** the arms (6, 9) are connected by double tie rods (14).

4. Material deformation testing stand according to the claim 1, **characterized in that** a supporting block (18) is arranged upon its base (4).

5. Material deformation testing stand according to the claim 1, **characterized in that** the weight bearing arm (9) is fitted with a grooved seat (12a) into which a wedge (11) having a triangular shape mounted on the cross-beam (7) of the support columns (3a) of the supporting frame (3) is laid.

6. Material deformation testing stand according to the claim 1, **characterized in that** the horizontal pivot (13) is arranged in both supporting columns (4a) and forms the joint of the positioning frame (4).

7. Material deformation testing stand according to the claim 1, **characterized in that** the arm (6) under the weight bearing arm (9) is constructed as a transmission arm having a pivot (15) at its free end holding two tie rods (30) attached to a similar pivot (16a) on the lower exerting arm (29) which is located parallel to the other arms (9, 6), wherein the exerting arm (29) is held in the position by the pivot (16a) and the pivot (52) arranged on the supporting frame (3) through which the arm (29) protrudes, so the lower exerting arm (29) is held in place between support columns (4a) of the frame (4) and also between the support columns (3a) of the other frame (3), wherein the area beneath the free end of the arm (29) is in the base (2) arranged an load frame (5) having an upper supporting cross-beam (27) wherein between the upper supporting cross-beam (27) and the free end of the arm (29) is a place for arrangment of the measuring assembly (17) with the sample (18).

8. Material deformation testing stand according to the claim 1, **characterized in that** underneath the arm (6) on the positioning column (34) and along both sides of this column (34) horizontal rods (47) having pivots (48b, 48c) at their ends are arranged swingable on a pivot (48a).

9. Material deformation testing stand according to the claim 8, **characterized in that** on the pivot (48b) the vertical tie rods (45) are arranged, which are at their other ends hung swingable on the free end of the arm (6).

## Patentansprüche

1. Materialdeformationsprüfstand für die langfristige Überwachung der Deformationseigenschaften unter konstantem Druck bestehend aus dem rahmenförmigen Grundgestell, auf dem der Aufnahmerahmen angebracht ist, und aus dem Belastungsarm, wobei der Belastungsarm mit dem für die schwenkbare Verbindung mit dem Rahmen vorgesehenen Bolzen versehen ist, **dadurch gekennzeichnet, dass** an einem Ende des rahmenförmigen Grundgestells (2) der Stützrahmen (3) angebracht ist, der im vorgegebenen Abstand von dem Aufnahmerahmen (4) angeordnet ist, wobei der Belastungsarm (9) vom Stützrahmen (3) abgestützt und an einem seiner Enden mit dem Bolzen (15) versehen ist, der für die schwenkbare Verbindung desselben mit mindestens einer Zugstrebe (14) vorgesehen ist, die auf ihrer anderen Seite mit dem weiteren Bolzen (16) versehen ist, der für die Aufhängung derselben auf dem Andrückarm (6) vorgesehen ist, der im wesentlichen parallel zum Belastungsarm (9) verläuft und in seiner Stellung einerseits von dem Bolzen (16) und andererseits von dem auf dem Aufnahmerahmen (4) angebrachten horizontalen Zapfen (13) gehalten wird, wobei der horizontale Zapfen (13) im vorgegebenen Abstand von dem freien Ende des Andrückarms (6) angeordnet ist, wobei zwischen dem freien Ende des Andrückarms (6) und dem Grundgestell (2) der Raum für die Unterbringung des Messsystems (17) mit dem Prüfling (20) gegeben ist.

2. Materialdeformationsprüfstand nach Anspruch 1, **dadurch gekennzeichnet, dass** die Rahmen (3, 4) als geschlossene Rahmen ausgeführt sind, die aus den in ihren oberen Abschnitten mittels der Querprofile (7, 8) verbundenen Ständern (3a, 4a) bestehen.

3. Materialdeformationsprüfstand nach Anspruch 1 und, **dadurch gekennzeichnet, dass** die Arme (6, 9) mittels der doppelt ausgeführten Zugstreben (14) verbunden sind.

4. Materialdeformationsprüfstand nach Anspruch 1, **dadurch gekennzeichnet, dass** auf dem Grundgestell (2) die prismenförmige Übertragungssäule (18) angebracht ist.

5. Materialdeformationsprüfstand nach Anspruch 1, **dadurch gekennzeichnet, dass** der Belastungsarm (9) mit dem Sattel (12) versehen ist, in dem die Nut (12a) ausgebildet ist, die das ein dreieckförmiges Querschnitt aufweisende Element (11) aufnimmt, das auf dem die Ständer (3a) des Stützrahmens (3) verbindenden Querbalken (7) angebracht ist.

6. Materialdeformationsprüfstand nach Anspruch 1, **dadurch gekennzeichnet, dass** der horizontale Bolzen (13) in beiden Ständern (4a) angeordnet ist, um das Gelenk des Aufnahmerahmens (4) zu bilden.

7. Materialdeformationsprüfstand nach Anspruch 1, **dadurch gekennzeichnet, dass** der Andrückarm (6) unterhalb des Belastungsarms (9) als Übertragungsarm ausgeführt und an seinem freien Ende mit dem Bolzen (15a) versehen ist, auf dem zwei Übertragungszugstangen (30) frei aufgehängt sind, wobei die Übertragungszugstangen (30) an ihren gegenüberliegenden Enden in derselben Art und Weise mittels der Zapfen (16a) wiederum auf dem unteren Andrückarm (29) aufgehängt sind, der im wesentlichen parallel zu den Armen (9, 6) verläuft, wobei der Andrückarm (29) dann in seiner Stellung einerseits von dem Bolzen (16a) und andererseits von dem auf dem Stützrahmen (3) angebrachten, durch den Andrückarm (29) durchgehenden Bolzen (52) gehalten wird, wobei der untere Andrückarm (29) somit sowohl zwischen den Ständern (4a) des Aufnahmerahmens (4) als auch zwischen den Ständern (3a) des Stützrahmens (3) angeordnet ist, wobei im Bereich unterhalb des freien Endes des Andrückarms (29) auf dem Grundgestell (2) der Belastungsrahmen (5) mit dem oberen unterstützenden Querbalken (27) angeordnet ist, wobei zwischen dem oberen unterstützenden Querbalken (27) und dem freien Ende des Andrückarms (29) der Raum für die Unterbringung des Messsystems (17) mit dem Prüfling (20) gegeben ist.

8. Materialdeformationsprüfstand nach Anspruch 1, **dadurch gekennzeichnet, dass** unterhalb des Andrückarms (6) an den beiden Seiten der Aufnahmesäule (34) zwei mittels des Bolzens (48a) schwenkbar gelagerte horizontale Stangen (47) angeordnet sind, die an ihren Enden mit den Zapfen (48b, 48c) versehen sind.

9. Materialdeformationsprüfstand nach Anspruch 8, **dadurch gekennzeichnet, dass** an den Zapfen (48b) die vertikal verlaufenden Zugstangen (45) angeschlossen sind, die an ihren gegenüberliegenden Enden schwenkbar an dem freien Ende des Andrückarms (6) aufgehängt sind.

## Revendications

1. Support de test de déformation de materiel pour la surveillance à long terme de la déformation des caractéristiques sous une pression constante composé d'une base en forme de bâti sur laquelle un châssis de dépôt est disposé, puis d'un bras de chargement muni d'une cheville pour permettre un assemblage pendulaire, **caractérisé en ce que** un châssis d'appui (3) est disposé sur l'une des extrémités du bâti de la base (2), le châssis d'appui étant disposé à une distance du châssis de dépôt (4), le bras de chargement (9) appuyé au châssis d'appui (3) est muni sur l'une de ses extrémités d'une cheville (15) pour permettre un assemblage pendulaire avec au moins une bielle (14), cette dernière étant munie sur son autre extrémité d'une autre cheville (16) pour pouvoir être suspendue au bras de pression (6) disposé en principe parallèlement au bras de chargement (9) et maintenu dans sa position sur le châssis de dépôt (4) d'une part par la cheville (16) et d'autre part par la cheville horizontale (13), la cheville horizontale (13) étant disposée à une distance de l'extrémité libre du bras de pression (6), un espace pour la mise en place de l'ensemble de mesure (17) y compris l'échantillon (20) se trouvant entre l'extrémité libre du bras de pression (6) et la base (2).

2. Support de test de déformation selon la revendication 1, **caractérisé en ce que** les châssis (3,4) sont réalisés comme fermés à l'aide des montants (3a, 4a) liés dans la pertie haute par les profilés transversales (7,8).

3. Support de test de déformation selon les revendications 1 et 2, **caractérisé en ce que** les bras (6,9) sont reliés par les bielles redoublées (14).

4. Support de test de déformation selon la revendication 1, **caractérisé en ce que** sur la base (4) un prisme de répartition (18) est monté.

5. Support de test de déformation selon la revendication 1, **caractérisé en ce que** le bras de chargement (9) est muni d'une semelle (12) avec une rainure (12 a) dans laquelle s'engage l'élément (11) à la coupe transversale en forme de triangle disposé sur la traverse (7) des montants (3a) du châssis d'appui (3).

6. Support de test de déformation selon la revendication 1, **caractérisé en ce que** la cheville horizontale (13) se trouve montée dans les deux montants (4a) et constitue l'articulation du châssis de dépôt (4).

7. Support de test de déformation selon la revendication 1, **caractérisé en ce que** le bras (6) sous le bras de chargement (9) est réalisé comme bras de transmission et est, sur son extrémité libre, muni d'une cheville (15a) sur laquelle deux bielles de transmission (30) sont librement suspendues, celles-ci (30) étant sur l'autre extrémité suspendues de la même manière, à l'aide des chevilles (16a), au bras de pression (29) disposé en principe parallèlement aux bras (9,6), le bras de pression (29) étant ainsi maintenu dans sa position d'une part par la cheville (16a), d'autre part par la cheville (52) du châssis d'appui (3), par lequel le bras (29) passe, le bras inférieur de pression (29) étant disposé entre les deux montants (4a) du châssis (4) de même qu 'entre les montants (3a) du châssis (3), le châssis de chargement (5) avec la traverse supérieure d'appui (27) étant disposé sur la base (2) dans la zone en dessous de l'extrémité libre du bras (29), l'espace pour la mise en place de l'ensemble de mesure (17) y compris l'échantillon (18) se trouvant entre la traverse supérieure d'appui (27) et l'extrémité libre du bras (29).

8. Support de test de déformation test selon la revendication 1, **caractérisé en ce que** les barres horizontales (47), munies sur leurs extrémités des chevilles (48b, 48c), se trouvent disposées, de manière pendulaire à l'aide d'une cheville (48a) des deux côtés du potelet (34), sur le potelet de dépôt (34) en dessous du bras (6).

9. Support de test de déformation selon la revendication 8, **caractérisé en ce que** les barres verticales d'attelage (45) sont reliées à la cheville (48b) et sont, sur leurs autres extrémités, suspendues de manière pendulaire à l'extrémité libre du bras (6).
